# EUROPEAN PATENT APPLICATION

(11) **EP 4 459 859 A1**
(43) Date of publication of application: **06.11.2024**
(21) Application number: 22913013.3
(22) Date of filing: 25.03.2022
(51) Int. Cl.: H02M 7/797

(54) **BIDIRECTIONAL ENERGY STORAGE CONVERTER AND ENERGY STORAGE SYSTEM**

(30) Priority: 31.12.2021 CN 202111675730; 31.12.2021 CN 202123421737 U
(71) Applicant: Jingtsing Technology Ltd, Beijing 101100 (CN)
(72) Inventor: GUAN, Eryong, Beijing 101100 (CN); WANG, Shien, Beijing 101100 (CN); JI, Ruiqiu, Beijing 101100 (CN)
(74) Representative: DREISS Patentanwälte PartG mbB
(86) International application number: PCT/CN2022/083049
(87) International publication number: WO 2023/123707

(57) **Abstract**

The present application provides a bidirectional energy storage converter and an energy storage system. The bidirectional energy storage converter comprises: at least one bridge arm. Each bridge arm comprises: a first switching circuit, a first end of the first switching circuit being connected to a positive electrode of a direct-current busbar, and a second end of the first switching circuit being connected to a neutral point of the direct-current busbar; a second switching circuit, a first end of the second switching circuit being connected to the neutral point of the direct-current busbar, and a second end of the second switching circuit being connected to a negative electrode of the direct-current busbar; and a third switching circuit, a first end of the third switching circuit being connected to a third end of the second switching circuit, a second end of the third switching circuit being connected to a third end of the first switching circuit, and a third end of the third switching circuit being connected to an alternating-current busbar.

## Description

### CROSS-REFERENCE TO RELATED APPLICATIONS

This disclosure claims priority to Chinese Patent Application No. 202111675730.8 filed with China National Intellectual Property Administration on December 31, 2021 and entitled "BIDIRECTIONAL ENERGY STORAGE CONVERTER AND ENERGY STORAGE SYSTEM", and claims priority to Chinese Patent Application No. 202123421737.5 filed with China National Intellectual Property Administration on December 31, 2021 and entitled "BIDIRECTIONAL ENERGY STORAGE CONVERTER AND ENERGY STORAGE SYSTEM", the entire contents of which are herein incorporated by reference.

### FIELD

The present disclosure relates to the field of energy storage, and specifically, relates to a bidirectional energy storage converter and an energy storage system.

### BACKGROUND

In a related art, in a high voltage energy storage system, due to the limitation of a semiconductor withstand voltage, if a low voltage semiconductor device is adopted, two-level and three-level energy storage converting circuit structures cannot generate a very high voltage. A high voltage semiconductor device has to be used, while this inevitably increases the cost of the system.

### SUMMARY

The present disclosure aims to solve at least one of the problems in the prior art.

Therefore, the first aspect of the present disclosure provides a bidirectional energy storage converter.

The second aspect of the present disclosure provides an energy storage system.

In view of this, the first aspect of the present disclosure provides a bidirectional energy storage converter, comprising at least one bridge arm, wherein each bridge arm comprises: a first switching circuit, wherein a first end of the first switching circuit is connected to a positive electrode of a direct-current busbar, and a second end of the first switching circuit is connected to a neutral point of the direct-current busbar; a second switching circuit, wherein a first end of the second switching circuit is connected to the neutral point of the direct-current busbar, and a second end of the second switching circuit is connected to a negative electrode of the direct-current busbar; and a third switching circuit, wherein a first end of the third switching circuit is connected to a third end of the second switching circuit, a second end of the third switching circuit is connected to a third end of the first switching circuit, and a third end of the third switching circuit is connected to an alternating-current busbar.

The present disclosure defines a bidirectional energy storage converter, and the bidirectional energy storage converter comprises at least one bridge arm, each bridge arm comprises three switching circuits, and specifically, the three switching circuits comprise the first switching circuit, the second switching circuit and the third switching circuit. Wherein, the first end and the second end of the first switching circuit are respectively connected to the positive electrode and the neutral point of the direct-current busbar, the first end and the second end of the second switching circuit are respectively connected to the neutral point and the negative electrode of the direct-current busbar, the first end and the second end of the third switching circuit are respectively connected to the second switching circuit and the third switching circuit, and the third end of the third switching circuit is connected to the alternating-current busbar.

It can be understood that the two ends of the first switching circuit are respectively connected to the positive electrode and the neutral point (0 electrode) of the direct-current busbar, the two ends of the second switching circuit are respectively connected to the neutral point and the negative electrode of the direct-current busbar, and the third switching circuit connected to the first switching circuit and the second switching circuit is connected to the alternating-current busbar, and therefore, different paths can be selected to transmit the current through limiting the on-off states of the first switching circuit, the second switching circuit and the third switching circuit.

It is worthy of explanation that the bidirectional energy storage converter optionally comprises three bridge arms, and the alternating-current connecting ends of the three bridge arms are respectively connected to an A phase, a B phase and a C phase of the alternating-current busbar.

In a related art, the bidirectional energy storage converter usually chooses a two-level or three-level circuit structure, as the two-level and three-level circuit structures cannot generate a very high voltage, a high voltage energy storage system needs to use a high voltage semiconductor device, then the cost of the system is increased.

The bidirectional energy storage converter provided in the present disclosure uses a five-level circuit structure, so that the semiconductor devices in the first switching circuit, the second switching circuit and the third switching circuit can choose a low voltage semiconductor device, and then the requirement for the voltage of the bidirectional energy storage converter can be satisfied, and thus the cost of the circuit members in the bidirectional energy storage converter is reduced.

Specifically, each of the first switching circuit, the second switching circuit and the third switching circuit in the embodiment of the present disclosure comprises a switching tube and a diode, wherein the switching tube can choose a low voltage semiconductor device with a relatively low cost, for example, a low voltage semiconductor device of 1200V or 1700V, the cost is lower compared with the two-level or three-level energy storage converter using a high voltage semiconductor device of 3300V or 4500V in the related art.

In addition, the above bidirectional energy storage converter provided in the present disclosure can further comprise following additional features:

in the above embodiment, the first switching circuit comprises: a first switching assembly, wherein a first end of the first switching assembly is connected to the positive electrode of the direct-current busbar; a second switching assembly, wherein a first end of the second switching assembly is connected to a second end of the first switching assembly, and a second end of the second switching assembly is connected to the neutral point of the direct-current busbar; and a third switching assembly, wherein a first end of the third switching assembly is connected to the second end of the first switching assembly, and a second end of the third switching assembly is connected to the second end of the third switching circuit.

In the embodiment, the first switching circuit comprises the first switching assembly, the second switching assembly and the third switching assembly. Wherein, the first end of the first switching assembly and the second end of the second switching assembly are respectively connected to the positive electrode and the neutral point of the direct-current busbar, the second end of the first switching assembly is connected to the first end of the second switching assembly, the first end of the third switching assembly is connected to a common end of the first switching assembly and the second switching assembly, and the second end of the third switching assembly is connected to the second end of the third switching circuit. The current can choose to flow through the first switching assembly or the second switching assembly through limiting the first switching assembly and the second switching assembly to be on or off.

Specifically, in the case that the second switching circuit is in an off state, if the first switching assembly is in an on state and the second switching assembly is in an off state, the current passes the positive electrode of the direct-current busbar, then flows through the first switching assembly and the third switching assembly and then flows into the alternating-current busbar via the third switching circuit. If the first switching assembly is in an off state and the second switching assembly is in an on state, the current passes the neutral point of the direct-current busbar, then flows through the second switching assembly and the third switching assembly and then flows into the alternating-current busbar via the third switching circuit.

In the embodiment of the present disclosure, through providing the first switching assembly, the second switching assembly and the third switching assembly in the first switching circuit, and through adjusting the on-off states of the first switching assembly, the second switching assembly and the third switching assembly, the flowing path of the current can be selected, thus, in the case that the voltages transmitting the current are different, different paths are selected to transmit the current, and it is achieved that a high voltage current can be transmitted stably without providing switching devices with a high voltage semiconductor device in the overall circuit.

In any of the above embodiments, the first switching assembly comprises: a first switching tube, wherein a first end of the first switching tube is connected to the positive electrode of the direct-current busbar; and a first diode, wherein a negative electrode of the first diode is connected to the first end of the first switching tube, and a positive electrode of the first diode is connected to a second end of the first switching tube; the second switching assembly comprises: a second switching tube, wherein a first end of the second switching tube is connected to the second end of the first switching tube, and a second end of the second switching tube is connected to the neutral point of the direct-current busbar; and a second diode, wherein a negative electrode of the second diode is connected to the first end of the second switching tube, and a positive electrode of the second diode is connected to the second end of the second switching tube; and the third switching assembly comprises: a third switching tube, wherein a first end of the third switching tube is connected to the second end of the first switching tube, and a second end of the third switching tube is connected to the second end of the third switching circuit; and a third diode, wherein a negative electrode of the third diode is connected to the first end of the third switching tube, and a positive electrode of the third diode is connected to the second end of the third switching tube.

In the embodiment, each of the first switching assembly, the second switching assembly and the third switching assembly is provided with the switching tube and the diode connected in parallel. Specifically, the first switching assembly comprises the first switching tube and the first diode connected in parallel, the first end of the first switching tube and the negative electrode of the first diode are jointly connected to the positive electrode of the direct-current busbar, the second end of the first switching tube and the positive electrode of the first diode are jointly connected to the first end of the second switching tube and the negative electrode of the second diode, and the second end of the second switching tube and the positive electrode of the second diode are jointly connected to the neutral point of the direct-current busbar. The third switching assembly is located at the clamping position of the whole circuit, the first end of the third switching tube and the negative electrode of the third diode are jointly connected to a common end of the first switching assembly and the second switching assembly, and the second end of the third switching tube and the positive electrode of the third diode are connected to the third switching circuit.

In the prior art, for two clamping diodes, when the bidirectional energy storage converter operates in a working condition of a low modulation ratio, the junction temperature of the clamping diodes is especially high, this renders the unbalanced temperature of the semiconductor in the bidirectional energy storage converter. If it needs to continue operating in the working condition of a low modulation ratio, the bidirectional energy storage converter needs to reduce capacity to be used.

The embodiments of the present disclosure replace the clamping diodes in the bidirectional energy storage converter in the prior art with the second switching assembly and the third switching assembly, the second switching assembly comprises the diode and the switching tube connected in parallel, the third switching assembly comprises the diode and the switching tube connected in parallel, then the effect of shunting the currents flowing through them is achieved, and this avoids the problem in the related art that the junction temperature of the clamping diode is high.

In any of the above embodiments, the second switching circuit comprises: a fourth switching assembly, wherein a first end of the fourth switching assembly is connected to the neutral point of the direct-current busbar; a fifth switching assembly, wherein a first end of the fifth switching assembly is connected to a second end of the fourth switching assembly, and a second end of the fifth switching assembly is connected to the negative electrode of the direct-current busbar; and a sixth switching assembly, wherein a first end of the sixth switching assembly is connected to the first end of the third switching circuit, and a second end of the sixth switching assembly is connected to the second end of the fourth switching assembly.

In the embodiment, the second switching circuit comprises the fourth switching assembly, the fifth switching assembly and the sixth switching assembly. Wherein, the first end and the second end of the fourth switching assembly are respectively connected to the neutral point of the direct-current busbar and the first end of the fifth switching assembly, the second end of the fifth switching assembly is connected to the negative electrode of the direct-current busbar, the second end of the sixth switching assembly is connected to a common end of the fourth switching assembly and the fifth switching assembly, and the first end of the sixth switching assembly is connected to the first end of the third switching circuit.

Specifically, in the case that the first switching circuit is in an off state, if the fourth switching assembly is in an on state and the fifth switching assembly is in an off state, the current passes the neutral point of the direct-current busbar, then flows through the fourth switching assembly and the sixth switching assembly and then flows into the alternating-current busbar via the third switching circuit. If the fourth switching assembly is in an off state and the fifth switching assembly is in an on state, the current passes the negative electrode of the direct-current busbar, then flows through the fifth switching assembly and the sixth switching assembly and then flows into the alternating-current busbar via the third switching circuit.

In the embodiment of the present disclosure, through providing the fourth switching assembly, the fifth switching assembly and the sixth switching assembly in the second switching circuit, and through adjusting the on-off states of the fourth switching assembly, the fifth switching assembly and the sixth switching assembly, the flowing path of the current can be selected, thus, in the case that the voltages transmitting the current are different, different paths are selected to transmit the current, and it is achieved that a high voltage current can be transmitted stably without providing switching devices with a high voltage semiconductor device in the overall circuit.

In any of the above embodiments, the fourth switching assembly comprises: a fourth switching tube, wherein a first end of the fourth switching tube is connected to the neutral point of the direct-current busbar; and a fourth diode, wherein a negative electrode of the fourth diode is connected to the first end of the fourth switching tube, and a positive electrode of the fourth diode is connected to a second end of the fourth switching tube; the fifth switching assembly comprises: a fifth switching tube, wherein a first end of the fifth switching tube is connected to the second end of the fourth switching tube, and a second end of the fifth switching tube is connected to the negative electrode of the direct-current busbar; and a fifth diode, wherein a negative electrode of the fifth diode is connected to the first end of the fifth switching tube, and a positive electrode of the fifth diode is connected to the second end of the fifth switching tube; and the sixth switching assembly comprises: a sixth switching tube, wherein a first end of the sixth switching tube is connected to the second end of the fourth switching tube, and a second end of the sixth switching tube is connected to the first end of the third switching circuit; and a sixth diode, wherein a positive electrode of the sixth diode is connected to the first end of the sixth switching tube, and a negative electrode of the sixth diode is connected to the second end of the sixth switching tube.

In the embodiment, each of the fourth switching assembly, the fifth switching assembly and the sixth switching assembly is provided with the switching tube and the diode connected in parallel. Specifically, the fourth switching assembly comprises the fourth switching tube and the fourth diode connected in parallel, the first end of the fourth switching tube and the negative electrode of the fourth diode are jointly connected to the neutral point of the direct-current busbar, the second end of the fourth switching tube and the positive electrode of the fourth diode are jointly connected to the first end of the fifth switching tube and the negative electrode of the fifth diode, and the second end of the fifth switching tube and the positive electrode of the fifth diode are jointly connected to the negative electrode of the direct-current busbar. The sixth switching assembly is located at the clamping position of the whole circuit, the first end of the sixth switching tube and the positive electrode of the sixth diode are jointly connected to a common end of the fourth switching assembly and the fifth switching assembly, and the second end of the sixth switching tube and the negative electrode of the sixth diode are connected to the third switching circuit.

In the prior art, for two clamping diodes, when the bidirectional energy storage converter operates in a working condition of a low modulation ratio, the junction temperature of the clamping diodes is especially high, this renders the unbalanced temperature of the semiconductor in the bidirectional energy storage converter. If it needs to continue operating in the working condition of a low modulation ratio, the bidirectional energy storage converter needs to reduce capacity to be used.

The embodiments of the present disclosure replace the clamping diodes in the bidirectional energy storage converter in the prior art with the fourth switching assembly and the sixth switching assembly, the fourth switching assembly comprises the diode and the switching tube connected in parallel, the sixth switching assembly comprises the diode and the switching tube connected in parallel, then the effect of shunting the currents flowing through them is achieved, and this avoids the problem in the related art that the junction temperature of the clamping diode is high. In any of the above embodiments, the third switching circuit comprises: a seventh switching assembly, wherein a first end of the seventh switching assembly is connected to the third end of the second switching circuit, and a second end of the seventh switching assembly is connected to the alternating-current busbar; and an eighth switching assembly, wherein a first end of the eighth switching assembly is connected to a second end of the seventh switching assembly, and a second end of the eighth switching assembly is connected to the first end of the first switching circuit.

In the embodiment, the third switching circuit comprise the seventh switching assembly and the eighth switching assembly, wherein, the first end and the second end of the seventh switching assembly are respectively connected to the second switching circuit and the alternating-current busbar, and the first end and the second end of the eighth switching assembly are respectively connected to the first switching circuit and the alternating-current busbar.

In the embodiments of the present disclosure, through providing the seventh switching assembly and the eighth switching assembly in the third switching circuit, and through limiting the on-off states of the seventh switching assembly and the eighth switching assembly, it can be selected that the current flows through the first switching circuit or the second switching circuit.

Specifically, when the seventh switching assembly is in an on state and the eighth switching assembly is in an off state, the current can flow through the second switching circuit; when the eighth switching assembly is in an on state and the seventh switching assembly is in an off state, the current can flow through the first switching circuit.

In any of the above embodiments, the seventh switching assembly comprises: a seventh switching tube, wherein a first end of the seventh switching tube is connected to the second switching circuit, and a second end of the seventh switching tube is connected to the alternating-current busbar; and a seventh diode, wherein a negative electrode of the seventh diode is connected to the first end of the seventh switching tube, and a positive electrode of the seventh diode is connected to a second end of the seventh switching tube; and the eighth switching assembly comprises: an eighth switching tube, wherein a first end of the eighth switching tube is connected to the second end of the seventh switching tube, and a second end of the eighth switching tube is connected to the first switching circuit; and an eighth diode, wherein a negative electrode of the eighth diode is connected to the first end of the eighth switching tube, and a positive electrode of the eighth diode is connected to the second end of the eighth switching tube.

In the embodiment, both of the seventh switching assembly and the eighth switching assembly comprise the switching tube and the diode connected in parallel. Wherein, the first end and the second end of the seventh switching tube are respectively connected to the second switching circuit and the alternating-current busbar, and the positive electrode and the negative electrode of the seventh diode are respectively connected to the second end and the first end of the seventh switching tube. The first end and the second end of the eighth switching tube are respectively connected to the first switching circuit and the alternating-current busbar, and the positive electrode and the negative electrode of the eighth diode are respectively connected to the second end and the first end of the eighth switching tube.

In any of the above embodiments, the bidirectional energy storage converter further comprises: a first capacitor, wherein, a first end of the first capacitor is connected to the positive electrode of the direct-current busbar; and a second capacitor, wherein a first end of the second capacitor is connected to a second end of the first capacitor and the neutral point of the direct-current busbar, and a second end of the second capacitor is configured to connect to the negative electrode of the direct-current busbar.

In the embodiment, the first capacitor is provided between the positive electrode and the neutral point (0 electrode) of the direct-current busbar, and the second capacitor is provided between the negative electrode and the neutral point (0 electrode) of the direct-current busbar. Through providing the capacitors among the positive electrode, the neutral point and the negative electrode of the direct-current busbar, the stability of a direct-current voltage can be ensured.

In any of the above embodiments, the bidirectional energy storage converter further comprises a third capacitor, and the first end of the third capacitor is connected to the first end of the third switching circuit and the second end of the third capacitor is connected to the second end of the third switching circuit.

In the embodiment, the bidirectional energy storage converter is further provided with the third capacitor, and the first end and the second end of the third capacitor are respectively connected to the first end and the second end of the third switching circuit, and the stability of the voltage flowing through the third switching circuit can be ensured through providing the third capacitor.

It is worthy of explanation that the first end of the third capacitor is connected to the common end of the seventh switching assembly and the sixth switching assembly in the second switching circuit, the second end of the third capacitor is connected to the common end of the eighth switching assembly and the third switching assembly in the first switching circuit, thus, through adjusting the on-off states of the seventh switching assembly and the eighth switching assembly, whether the current flows through the third capacitor can be adjusted, then selecting a low voltage semiconductor device is achieved, the requirement for the voltage of the bidirectional energy storage converter can be satisfied, and thus the cost of the circuit members in the bidirectional energy storage converter is reduced.

The second aspect of the present disclosure provides an energy storage system, and the energy storage system comprises the bidirectional energy storage converter in the first aspect, and thus comprises all the beneficial effects of the bidirectional energy storage converter in the first aspect, which are not repeated herein.

It can be understood that the energy storage system further comprises an energy storage member which is connected to the direct-current busbar.

The additional aspects and advantages of the present disclosure will be obvious in the following description, or can be understood through the implementation of the present disclosure.

### BRIEF DESCRIPTION OF THE DRAWINGS

The above and/or additional aspects and advantages of the present disclosure will be obvious and understood easily from the following description of the embodiments in combination with the accompanying drawings. Wherein,
FIG. 1 is a first schematic view of the structure of a bidirectional energy storage converter according to an embodiment of the present disclosure;
FIG. 2 is a second schematic view of the structure of a bidirectional energy storage converter according to an embodiment of the present disclosure;
FIG. 3 is a first schematic view of a current direction in a bidirectional energy storage converter according to an embodiment of the present disclosure;
FIG. 4 is a second schematic view of a current direction in a bidirectional energy storage converter according to an embodiment of the present disclosure;
FIG. 5 is a third schematic view of a current direction in a bidirectional energy storage converter according to an embodiment of the present disclosure;
FIG. 6 is a fourth schematic view of a current direction in a bidirectional energy storage converter according to an embodiment of the present disclosure;
FIG. 7 is a fifth schematic view of a current direction in a bidirectional energy storage converter according to an embodiment of the present disclosure;
FIG. 8 is a sixth schematic view of a current direction in a bidirectional energy storage converter according to an embodiment of the present disclosure;
FIG. 9 is a seventh schematic view of a current direction in a bidirectional energy storage converter according to an embodiment of the present disclosure; and
FIG. 10 is an eighth schematic view of a current direction in a bidirectional energy storage converter according to an embodiment of the present disclosure.

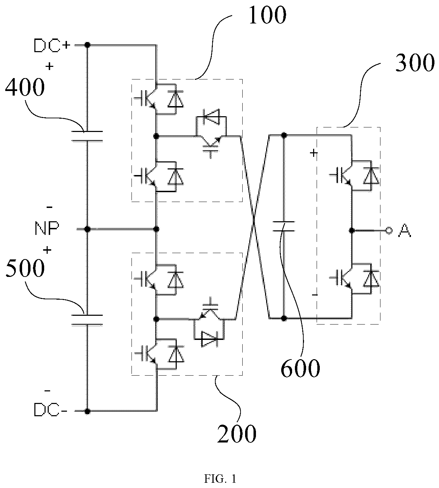

Wherein, the corresponding relationships between the reference signs and the component names in FIG. 1 to FIG. 10 are as follows:
100 first switching circuit; 110 first switching assembly; 112 first switching tube; 114 first diode; 120 second switching assembly; 122 second switching tube; 124 second diode; 130 third switching assembly; 132 third switching tube; 134 third diode; 200 second switching circuit; 210 fourth switching assembly; 212 fourth switching tube; 214 fourth diode; 220 fifth switching assembly; 222 fifth switching tube; 224 fifth diode; 230 sixth switching assembly; 232 sixth switching tube; 234 sixth diode; 300 third switching circuit; 310 seventh switching assembly; 312 seventh switching tube; 314 seventh diode; 320 eighth switching assembly; 322 eighth switching tube; 324 eighth diode; 400 first capacitor; 500 second capacitor; 600 third capacitor; DC+ positive electrode of direct-current busbar; DC- negative electrode of direct-current busbar; NP neutral point of direct-current busbar; and A alternating-current busbar.

### DETAILED DESCRIPTION OF THE DISCLOSURE

To more clearly understand the above purposes, features and advantages of the present disclosure, the present disclosure will be further detailed hereinafter in combination with the accompanying drawings and embodiments. It should be indicated that in the case of no conflict, the embodiments and the features in the embodiments of the present disclosure can be combined with each other.

Many details are illustrated in the following description for the convenience of a thorough understanding to the present disclosure, but the present disclosure can also be implemented using other embodiments other than these described herein. Therefore, the protection scope of the present disclosure is not limited to the specific embodiments disclosed in the following text.

A bidirectional energy storage converter and an energy storage system according to some embodiments of the present disclosure are described in the following by referring to FIG. 1 to FIG. 10.

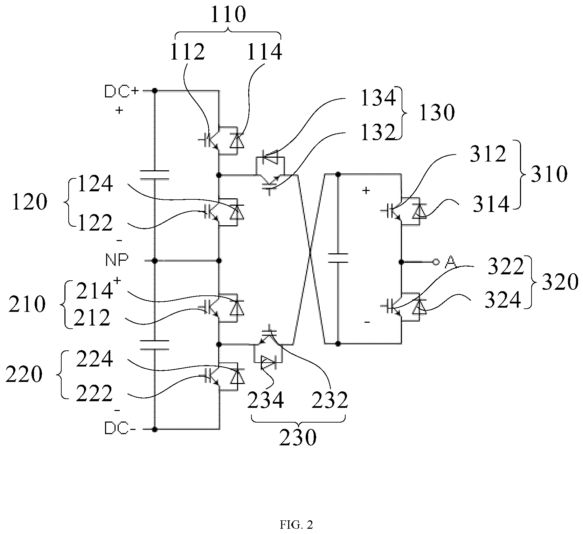

As shown in FIG. 1 and FIG. 2, the first embodiment according to the present embodiment provides a bidirectional energy storage converter, comprising: at least one bridge arm, wherein each bridge arm comprises: a first switching circuit 100, a second switching circuit 200 and a third switching circuit 300.

A first end of the first switching circuit 100is connected to a positive electrode of a direct-current busbar, and a second end of the first switching circuit 100is connected to a neutral point of the direct-current busbar;
a first end of the second switching circuit 200is connected to the neutral point of the direct-current busbar, and a second end of the second switching circuit 200is connected to a negative electrode of the direct-current busbar; and
a first end of the third switching circuit 300is connected to a third end of the second switching circuit 200, a second end of the third switching circuit 300 is connected to a third end of the first switching circuit 100, and a third end of the third switching circuit 300 is connected to an alternating-current busbar.

The present embodiment defines a bidirectional energy storage converter, and the bidirectional energy storage converter comprises at least one bridge arm, each bridge arm comprises three switching circuits, and specifically, the three switching circuits comprise the first switching circuit 100, the second switching circuit 200 and the third switching circuit 300. Wherein, the first end and the second end of the first switching circuit 100 are respectively connected to the positive electrode DC+ and the neutral point NP of the direct-current busbar, the first end and the second end of the second switching circuit 200 are respectively connected to the neutral point and the negative electrode of the direct-current busbar, the first end and the second end of the third switching circuit 300 are respectively connected to the second switching circuit 200 and the third switching circuit 300, and the third end of the third switching circuit 300 is connected to the alternating-current busbar A.

It can be understood that the two ends of the first switching circuit 100 are respectively connected to the positive electrode and the neutral point (0 electrode) of the direct-current busbar, the two ends of the second switching circuit 200 are respectively connected to the neutral point and the negative electrode of the direct-current busbar, and the third switching circuit 300 connected to the first switching circuit 100 and the second switching circuit 200 is connected to the alternating-current busbar, and therefore, different paths can be selected to transmit the current through limiting the on-off states of the first switching circuit 100, the second switching circuit 200 and the third switching circuit 300.

It is worthy of explanation that the bidirectional energy storage converter optionally comprises three bridge arms, and the alternating-current connecting ends of the three bridge arms are respectively connected to an A phase, a B phase and a C phase of the alternating-current busbar.

In a related art, the bidirectional energy storage converter usually chooses a two-level or three-level circuit structure, as the two-level and three-level circuit structures cannot generate a very high voltage, a high voltage energy storage system needs to use a high voltage semiconductor device, then the cost of the system is increased.

The bidirectional energy storage converter provided in the present disclosure uses a five-level circuit structure, so that the semiconductor devices in the first switching circuit 100, the second switching circuit 200 and the third switching circuit 300 can choose a low voltage semiconductor device, and then the requirement for the voltage of the bidirectional energy storage converter can be satisfied, and thus the cost of the circuit members in the bidirectional energy storage converter is reduced.

Specifically, each of the first switching circuit 100, the second switching circuit 200 and the third switching circuit 300 in the embodiment of the present disclosure comprises a switching tube and a diode, wherein the switching tube can choose a low voltage semiconductor device with a relatively low cost, for example, a low voltage semiconductor device of 1200V or 1700V, the cost is lower compared with the two-level or three-level energy storage converter using a high voltage semiconductor device of 3300V or 4500V in the related art.

As shown in FIG. 1 and FIG. 2, in the above embodiment, the first switching circuit 100 comprises a first switching assembly 110, a second switching assembly 120 and a third switching assembly 130.

A first end of the first switching assembly 110 is connected to the positive electrode of the direct-current busbar; a first end of the second switching assembly 120 is connected to a second end of the first switching assembly 110, and a second end of the second switching assembly 120 is connected to the neutral point of the direct-current busbar; a first end of the third switching assembly 130 is connected to the second end of the first switching assembly 110, and a second end of the third switching assembly 130 is connected to the second end of the third switching circuit 300.

In the embodiment, the first switching circuit 100 comprises the first switching assembly 110, the second switching assembly 120 and the third switching assembly 130. Wherein, the first end of the first switching assembly 110 and the second end of the second switching assembly 120 are respectively connected to the positive electrode and the neutral point of the direct-current busbar, the second end of the first switching assembly 110 is connected to the first end of the second switching assembly 120, the first end of the third switching assembly 130 is connected to a common end of the first switching assembly 110 and the second switching assembly 120, and the second end of the third switching assembly 130 is connected to the second end of the third switching circuit 300. The current can choose to flow through the first switching assembly 110 or the second switching assembly 120 through limiting the first switching assembly 110 and the second switching assembly 120 to be on or off.

Specifically, in the case that the second switching circuit 200 is in an off state, if the first switching assembly 110 is in an on state and the second switching assembly 120 is in an off state, the current passes the positive electrode of the direct-current busbar, then flows through the first switching assembly 110 and the third switching assembly 130 and then flows into the alternating-current busbar via the third switching circuit 300. If the first switching assembly 110 is in an off state and the second switching assembly 120 is in an on state, the current passes the neutral point of the direct-current busbar, then flows through the second switching assembly 120 and the third switching assembly 130 and then flows into the alternating-current busbar via the third switching circuit 300.

In the embodiment of the present disclosure, through providing the first switching assembly 110, the second switching assembly 120 and the third switching assembly 130 in the first switching circuit 100, and through adjusting the on-off states of the first switching assembly 110, the second switching assembly 120 and the third switching assembly 130, the flowing path of the current can be selected, thus, in the case that the voltages transmitting the current are different, different paths are selected to transmit the current, and it is achieved that a high voltage current can be transmitted stably without providing switching devices with a high voltage semiconductor device in the overall circuit.

As shown in FIG. 1 and FIG. 2, in any of the above embodiments, the first switching assembly 110 comprises a first switching tube 112 and a first diode 114.

A first end of the first switching tube 112 is connected to the positive electrode of the direct-current busbar; a negative electrode of the first diode 114 is connected to the first end of the first switching tube 112, and a positive electrode of the first diode 114 is connected to a second end of the first switching tube 112.

The second switching assembly 120 comprises a second switching tube 122 and a second diode 124.

A first end of the second switching tube 112 is connected to the second end of the first switching tube 112, and a second end of the second switching tube 122 is connected to the neutral point of the direct-current busbar; a negative electrode of the second diode 124 is connected to the first end of the second switching tube 122, and a positive electrode of the second diode 124 is connected to the second end of the second switching tube 122.

The third switching assembly 130 comprises a third switching tube 132 and a third diode 134.

A first end of the third switching tube 132 is connected to the second end of the first switching tube 112, and a second end of the third switching tube 132 is connected to the second end of the third switching circuit 300; a negative electrode of the third diode 134 is connected to the first end of the third switching tube 132, and a positive electrode of the third diode 134 is connected to the second end of the third switching tube 132.

In the embodiment, each of the first switching assembly 110, the second switching assembly 120 and the third switching assembly 130 is provided with the switching tube and the diode connected in parallel. Specifically, the first switching assembly 110 comprises the first switching tube 112 and the first diode 114 connected in parallel, the first end of the first switching tube 112 and the negative electrode of the first diode 114 are jointly connected to the positive electrode of the direct-current busbar, the second end of the first switching tube 112 and the positive electrode of the first diode 114 are jointly connected to the first end of the second switching tube 122 and the negative electrode of the second diode 124, and the second end of the second switching tube 122 and the positive electrode of the second diode 124 are jointly connected to the neutral point of the direct-current busbar. The third switching assembly 130 is located at the clamping position of the whole circuit, the first end of the third switching tube 132 and the negative electrode of the third diode 134 are jointly connected to a common end of the first switching assembly 110 and the second switching assembly 120, and the second end of the third switching tube 132 and the positive electrode of the third diode 134 are connected to the third switching circuit 300.

In the prior art, for two clamping diodes, when the bidirectional energy storage converter operates in a working condition of a low modulation ratio, the junction temperature of the clamping diodes is especially high, this renders the unbalanced temperature of the semiconductor in the bidirectional energy storage converter. If it needs to continue operating in the working condition of a low modulation ratio, the bidirectional energy storage converter needs to reduce capacity to be used.

The embodiments of the present disclosure replace the clamping diodes in the bidirectional energy storage converter in the prior art with the second switching assembly 120 and the third switching assembly 130, the second switching assembly 120 comprises the diode and the switching tube connected in parallel, the third switching assembly 130 comprises the diode and the switching tube connected in parallel, then the effect of shunting the currents flowing through them is achieved, and this avoids the problem in the related art that the junction temperature of the clamping diode is high.

As shown in FIG. 1 and FIG. 2, in any of the above embodiments, the second switching circuit 200 comprises a fourth switching assembly 210, a fifth switching assembly 220 and a sixth switching assembly 230.

A first end of the fourth switching assembly 210 is connected to the neutral point of the direct-current busbar; a first end of the fifth switching assembly 220 is connected to a second end of the fourth switching assembly 210, and a second end of the fifth switching assembly 220 is connected to the negative electrode of the direct-current busbar; a first end of the sixth switching assembly 230 is connected to the first end of the third switching circuit 300, and a second end of the sixth switching assembly 230 is connected to the second end of the fourth switching assembly 210.

In the embodiment, the second switching circuit 200 comprises the fourth switching assembly 210, the fifth switching assembly 220 and the sixth switching assembly 230. Wherein, the first end and the second end of the fourth switching assembly 210 are respectively connected to the neutral point of the direct-current busbar and the first end of the fifth switching assembly 220, the second end of the fifth switching assembly 220 is connected to the negative electrode of the direct-current busbar, the second end of the sixth switching assembly 230 is connected to a common end of the fourth switching assembly 210 and the fifth switching assembly 220, and the first end of the sixth switching assembly 230 is connected to the first end of the third switching circuit 300.

Specifically, in the case that the first switching circuit 100 is in an off state, if the fourth switching assembly 210 is in an on state and the fifth switching assembly 220 is in an off state, the current passes the neutral point of the direct-current busbar, then flows through the fourth switching assembly 210 and the sixth switching assembly 230 and then flows into the alternating-current busbar via the third switching circuit 300. If the fourth switching assembly 210 is in an off state and the fifth switching assembly 220 is in an on state, the current passes the negative electrode of the direct-current busbar, then flows through the fifth switching assembly 220 and the sixth switching assembly 230 and then flows into the alternating-current busbar via the third switching circuit 300.

In the embodiment of the present disclosure, through providing the fourth switching assembly 210, the fifth switching assembly 220 and the sixth switching assembly 230 in the second switching circuit 200, and through adjusting the on-off states of the fourth switching assembly 210, the fifth switching assembly 220 and the sixth switching assembly 230, the flowing path of the current can be selected, thus, in the case that the voltages transmitting the current are different, different paths are selected to transmit the current, and it is achieved that a high voltage current can be transmitted stably without providing switching devices with a high voltage semiconductor device in the overall circuit.

As shown in FIG. 1 and FIG. 2, in any of the above embodiments, the fourth switching assembly 210 comprises a fourth switching tube 212 and a fourth diode 214.

A first end of the fourth switching tube 212 is connected to the neutral point of the direct-current busbar; a negative electrode of the fourth diode 214 is connected to the first end of the fourth switching tube 212, and a positive electrode of the fourth diode 214 is connected to a second end of the fourth switching tube 212.

The fifth switching assembly 220 comprises a fifth switching tube 222 and a fifth diode 224.

A first end of the fifth switching tube 222 is connected to the second end of the fourth switching tube 212, and a second end of the fifth switching tube 222 is connected to the negative electrode of the direct-current busbar; a negative electrode of the fifth diode 224 is connected to the first end of the fifth switching tube 222, and a positive electrode of the fifth diode 224 is connected to the second end of the fifth switching tube 222.

The sixth switching assembly 230 comprises a sixth switching tube 232 and a sixth diode 234.

A first end of the sixth switching tube 232 is connected to the second end of the fourth switching tube 212, and a second end of the sixth switching tube 232 is connected to the first end of the third switching circuit 300.

A positive electrode of the sixth diode 234 is connected to the first end of the sixth switching tube 232, and a negative electrode of the sixth diode 234 is connected to the second end of the sixth switching tube 232.

In the embodiment, each of the fourth switching assembly 210, the fifth switching assembly 220 and the sixth switching assembly 230 is provided with the switching tube and the diode connected in parallel. Specifically, the fourth switching assembly 210 comprises the fourth switching tube 212 and the fourth diode 214 connected in parallel, the first end of the fourth switching tube 212 and the negative electrode of the fourth diode 214 are jointly connected to the neutral point of the direct-current busbar, the second end of the fourth switching tube 212 and the positive electrode of the fourth diode 214 are jointly connected to the first end of the fifth switching tube 222 and the negative electrode of the fifth diode 224, and the second end of the fifth switching tube 222 and the positive electrode of the fifth diode 224 are jointly connected to the negative electrode of the direct-current busbar. The sixth switching assembly 230 is located at the clamping position of the whole circuit, the first end of the sixth switching tube 232 and the positive electrode of the sixth diode 234 are jointly connected to a common end of the fourth switching assembly 210 and the fifth switching assembly 220, and the second end of the sixth switching tube 232 and the negative electrode of the sixth diode 234 are connected to the third switching circuit 300.

In the prior art, for two clamping diodes, when the bidirectional energy storage converter operates in a working condition of a low modulation ratio, the junction temperature of the clamping diodes is especially high, this renders the unbalanced temperature of the semiconductor in the bidirectional energy storage converter. If it needs to continue operating in the working condition of a low modulation ratio, the bidirectional energy storage converter needs to reduce capacity to be used.

The embodiments of the present disclosure replace the clamping diodes in the bidirectional energy storage converter in the prior art with the fourth switching assembly 210 and the sixth switching assembly 230, the fourth switching assembly 210 comprises the diode and the switching tube connected in parallel, the sixth switching assembly 230 comprises the diode and the switching tube connected in parallel, then the effect of shunting the currents flowing through them is achieved, and this avoids the problem in the related art that the junction temperature of the clamping diode is high.

As shown in FIG. 1 and FIG. 2, in any of the above embodiments, the third switching circuit 300 comprises a seventh switching assembly 310 and an eighth switching assembly 320.

A first end of the seventh switching assembly 310 is connected to the third end of the second switching circuit 200, and a second end of the seventh switching assembly 310 is connected to the alternating-current busbar; wherein a first end of the eighth switching assembly 320 is connected to a second end of the seventh switching assembly 310, and a second end of the eighth switching assembly 320 is connected to the first end of the first switching circuit 100.

In the embodiment, the third switching circuit 300 comprise the seventh switching assembly 310 and the eighth switching assembly 320, wherein, the first end and the second end of the seventh switching assembly 310 are respectively connected to the second switching circuit 200 and the alternating-current busbar, and the first end and the second end of the eighth switching assembly 320 are respectively connected to the first switching circuit 100 and the alternating-current busbar.

In the embodiments of the present disclosure, through providing the seventh switching assembly 310 and the eighth switching assembly 320 in the third switching circuit 300, and through limiting the on-off states of the seventh switching assembly 310 and the eighth switching assembly 320, it can be selected that the current flows through the first switching circuit 100 or the second switching circuit 200.

Specifically, when the seventh switching assembly 310 is in an on state and the eighth switching assembly 320 is in an off state, the current can flow through the second switching circuit 200; when the eighth switching assembly 320 is in an on state and the seventh switching assembly 310 is in an off state, the current can flow through the first switching circuit 100.

As shown in FIG. 1 and FIG. 2, in any of the above embodiments, the seventh switching assembly 310 comprises a seventh switching tube 312 and a seventh diode 314.

A first end of the seventh switching tube 312 is connected to the second switching circuit 200, and a second end of the seventh switching tube 312 is connected to the alternating-current busbar; a negative electrode of the seventh diode 314 is connected to the first end of the seventh switching tube 312, and a positive electrode of the seventh diode 314 is connected to a second end of the seventh switching tube 312.

The eighth switching assembly 320 comprises an eighth switching tube 322 and an eighth diode 324.

A first end of the eighth switching tube 322 is connected to the second end of the seventh switching tube 312, and a second end of the eighth switching tube 322 is connected to the first switching circuit 100; a negative electrode of the eighth diode 324 is connected to the first end of the eighth switching tube 322, and a positive electrode of the eighth diode 324 is connected to the second end of the eighth switching tube 322.

In the embodiment, both of the seventh switching assembly 310 and the eighth switching assembly 320 comprise the switching tube and the diode connected in parallel. Wherein, the first end and the second end of the seventh switching tube 312 are respectively connected to the second switching circuit 200 and the alternating-current busbar, and the positive electrode and the negative electrode of the seventh diode 314 are respectively connected to the second end and the first end of the seventh switching tube 312. The first end and the second end of the eighth switching tube 322 are respectively connected to the first switching circuit 100 and the alternating-current busbar, and the positive electrode and the negative electrode of the eighth diode 324 are respectively connected to the second end and the first end of the eighth switching tube 322.

As shown in FIG. 1 and FIG. 2, in any of the above embodiments, the bidirectional energy storage converter further comprises a first capacitor 400 and a second capacitor 500.

A first end of the first capacitor 400 is connected to the positive electrode of the direct-current busbar; wherein a first end of the second capacitor 500 is connected to a second end of the first capacitor 400 and the neutral point of the direct-current busbar, and a second end of the second capacitor 500 is configured to connect to the negative electrode of the direct-current busbar.

In the embodiment, the first capacitor 400 is provided between the positive electrode and the neutral point (0 electrode) of the direct-current busbar, and the second capacitor 500 is provided between the negative electrode and the neutral point (0 electrode) of the direct-current busbar. Through providing the capacitors among the positive electrode, the neutral point and the negative electrode of the direct-current busbar, the stability of a direct-current voltage can be ensured.

In any of the above embodiments, the bidirectional energy storage converter further comprises a third capacitor 600, and the first end of the third capacitor 600 is connected to the first end of the third switching circuit 300 and the second end of the third capacitor 600 is connected to the second end of the third switching circuit 300.

In the embodiment, the bidirectional energy storage converter is further provided with the third capacitor 600, and the first end and the second end of the third capacitor 600 are respectively connected to the first end and the second end of the third switching circuit 300, and the stability of the voltage flowing through the third switching circuit 300 can be ensured through providing the third capacitor 600, then selecting a low voltage semiconductor device is achieved, the requirement for the voltage of the bidirectional energy storage converter can be satisfied, and thus the cost of the circuit members in the bidirectional energy storage converter is reduced.

It is worthy of explanation that the first end of the third capacitor 600 is connected to the common end of the seventh switching assembly 310 and the sixth switching assembly 230 in the second switching circuit 200, the second end of the third capacitor 600 is connected to the common end of the eighth switching assembly 320 and the third switching assembly 130 in the first switching circuit 100, thus, through adjusting the on-off states of the seventh switching assembly 310 and the eighth switching assembly 320, whether the current flows through the third capacitor 600 can be adjusted, then selecting a low voltage semiconductor device is achieved, the requirement for the voltage of the bidirectional energy storage converter can be satisfied, and thus the cost of the circuit members in the bidirectional energy storage converter is reduced.

The second embodiment of the present disclosure provides a bidirectional energy storage converter, comprising: at least one bridge arm, wherein each bridge arm comprises: a first switching assembly 110, a second switching assembly 120, a third switching assemblyl30, a fourth switching assembly 210, a fifth switching assembly 220, a sixth switching assembly 230, a seventh switching assembly 310, an eighth switching assembly 320 and a third capacitor 600.

Wherein a first end of the first switching assembly 110is connected to a positive electrode of a direct-current busbar, and a second end of the first switching assembly 110 is connected to a first end of the second switching assembly 120, a second end of the second switching assembly 120is connected to a neutral point of the direct-current busbar; a common end of the first switching assembly 110 and the second switching assembly 120 is connected to one end of the third switching assembly 130, the other end of the third switching assembly 130 is connected to the eighth switching assembly 320, and the eighth switching assembly 320 is connected to the alternating-current busbar.

A first end of the fourth switching assembly 210 is connected to the neutral point of the direct-current busbar, a second end of the fourth switching assembly 210 is connected to a first end of the fifth switching assembly 220, a second end of the fifth switching assembly 220 is connected to the negative electrode of the direct-current busbar, a common end of the fourth switching assembly 210 and the fifth switching assembly 220 is connected to one end of the sixth switching assembly 230, the other end of the sixth switching assembly 230 is connected to the seventh switching assembly 310, and the seventh switching assembly 310 is connected to the alternating-current busbar.

A first end of the third capacitor 600 is connected to a common end of the seventh switching assembly 310 and a sixth switching assembly 230, and a second end of the third capacitor 600 is connected to a common end of the eighth switching assembly 320 and a third switching assembly 130.

It is understandable that different current paths are selected in the case that different voltages are transmitted, and specifically provided as follows.

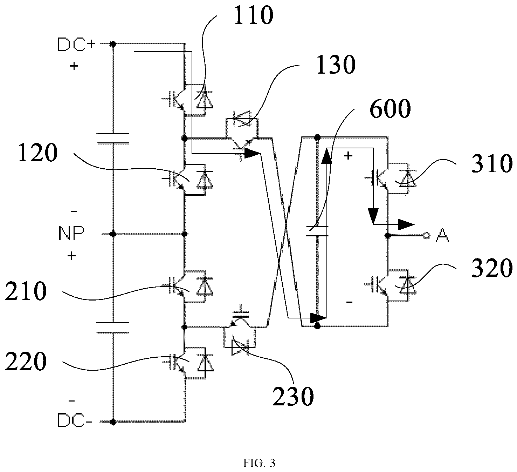

In the case that the current flows from the direct-current busbar to the alternating-current busbar, and the voltage value is 2Vdc, FIG. 3 is a first schematic view of a current direction in a bidirectional energy storage converter according to an embodiment of the present disclosure, as shown in FIG. 3, in the case that the voltage value is 2Vdc, the first switching assembly 110, the third switching assembly 130 and the seventh switching assembly 310 are limited in an on state, the current flows from the positive electrode of the direct-current busbar through the first switching assembly 110, the third switching assembly 130, the third capacitor 600 and the seventh switching assembly 310, to the alternating-current busbar.

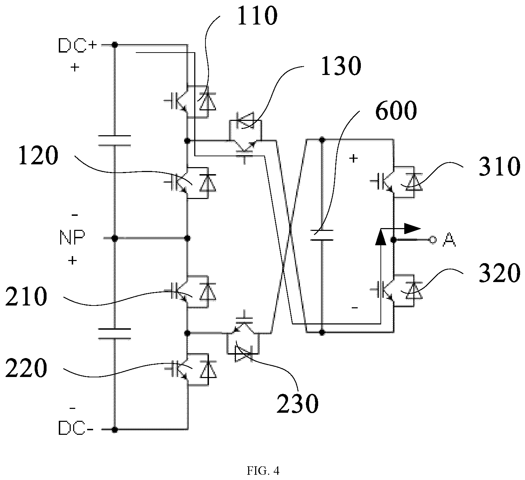

In the case that the current flows from the direct-current busbar to the alternating-current busbar, and the voltage value is Vdc, FIG. 4 is a second schematic view of a current direction in a bidirectional energy storage converter according to an embodiment of the present disclosure, as shown in FIG. 4, in the case that the voltage value is Vdc, the first switching assembly 110, the third switching assembly 130 and the eighth switching assembly 320 are limited in an on state, the current flows from the positive electrode of the direct-current busbar through the first switching assembly 110, the third switching assembly 130 and the eighth switching assembly 320, to the alternating-current busbar.

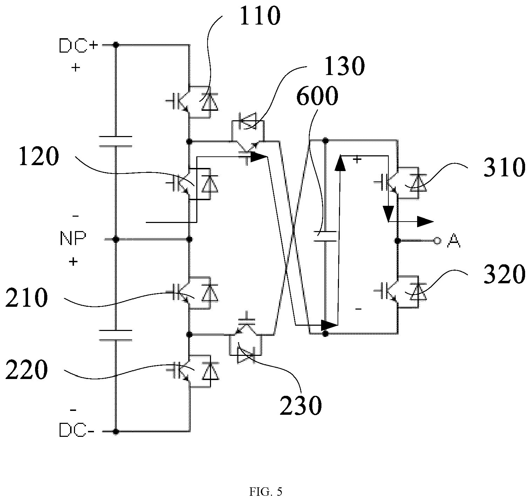

In the case that the current flows from the direct-current busbar to the alternating-current busbar, and the voltage value is Vdc, FIG. 5 is a third schematic view of a current direction in a bidirectional energy storage converter according to an embodiment of the present disclosure, as shown in FIG. 5, in the case that the voltage value is Vdc, the second switching assembly 120, the third switching assembly 130 and the seventh switching assembly 310 are limited in an on state, the current flows from the neutral point of the direct-current busbar through the second switching assembly 120, the third switching assembly 130, the third capacitor 600 and the seventh switching assembly 310, to the alternating-current busbar.

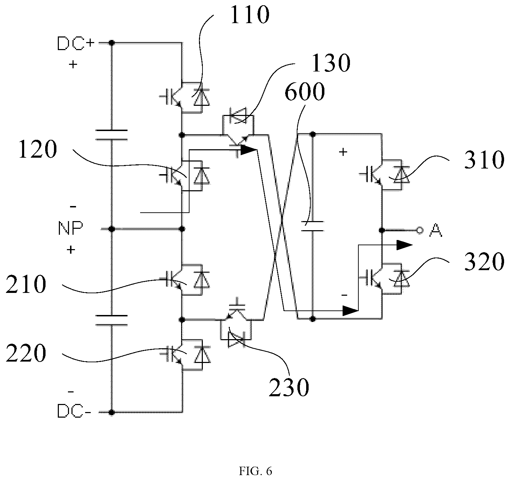

In the case that the current flows from the direct-current busbar to the alternating-current busbar, and the voltage value is 0, FIG. 6 is a fourth schematic view of a current direction in a bidirectional energy storage converter according to an embodiment of the present disclosure, as shown in FIG. 6, in the case that the voltage value is 0, the second switching assembly 120, the third switching assembly 130 and the eighth switching assembly 320 are limited in an on state, the current flows from the neutral point of the direct-current busbar through the second switching assembly 120, the third switching assembly 130 and the eighth switching assembly 320, to the alternating-current busbar.

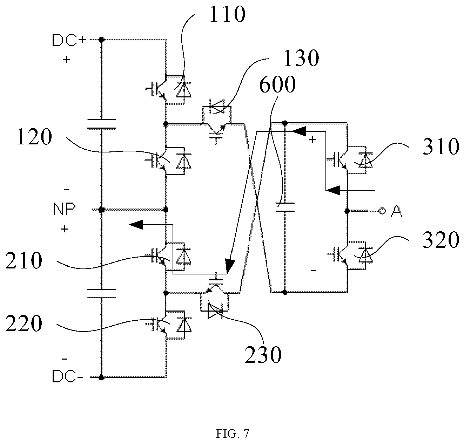

In the case that the current flows from the alternating-current busbar to the direct-current busbar, and the voltage value is 0, FIG. 7 is a fifth schematic view of a current direction in a bidirectional energy storage converter according to an embodiment of the present disclosure, as shown in FIG. 7, in the case that the voltage value is 0, the fourth switching assembly 210, the sixth switching assembly 230 and the seventh switching assembly 310 are limited in an on state, the current flows from the alternating-current busbar through the seventh switching assembly 310, the sixth switching assembly 230 and the fourth switching assembly 210, to the neutral point of the direct-current busbar.

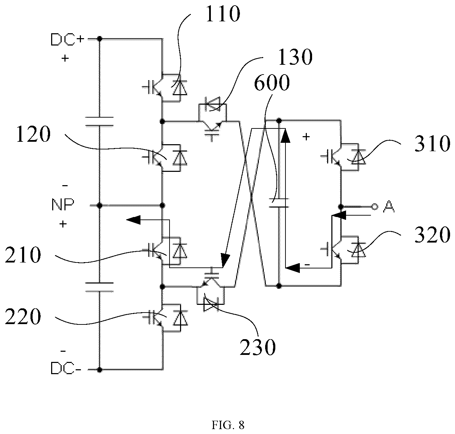

In the case that the current flows from the alternating-current busbar to the direct-current busbar, and the voltage value is -Vdc, FIG. 8 is a sixth schematic view of a current direction in a bidirectional energy storage converter according to an embodiment of the present disclosure, as shown in FIG. 8, in the case that the voltage value is -Vdc, the fourth switching assembly 210, the sixth switching assembly 230 and the eighth switching assembly 320 are limited in an on state, the current flows from the alternating-current busbar through the eighth switching assembly 320, the third capacitor 600, the sixth switching assembly 230 and the fourth switching assembly 210, to the neutral point of the direct-current busbar.

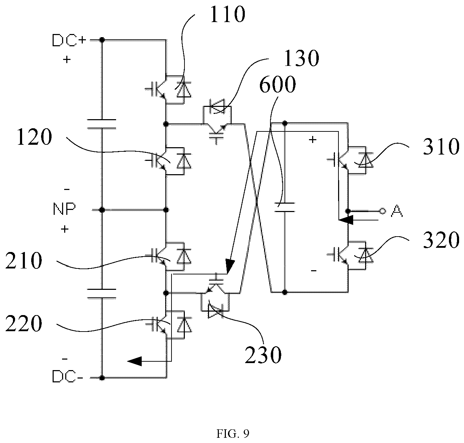

In the case that the current flows from the alternating-current busbar to the direct-current busbar, and the voltage value is -Vdc, FIG. 9 is a seventh schematic view of a current direction in a bidirectional energy storage converter according to an embodiment of the present disclosure, as shown in FIG. 9, in the case that the voltage value is -Vdc, the fifth switching assembly 220, the sixth switching assembly 230 and the seventh switching assembly 310 are limited in an on state, the current flows from the alternating-current busbar through the seventh switching assembly 310, the sixth switching assembly 230 and the fifth switching assembly 220, to the negative electrode of the direct-current busbar.

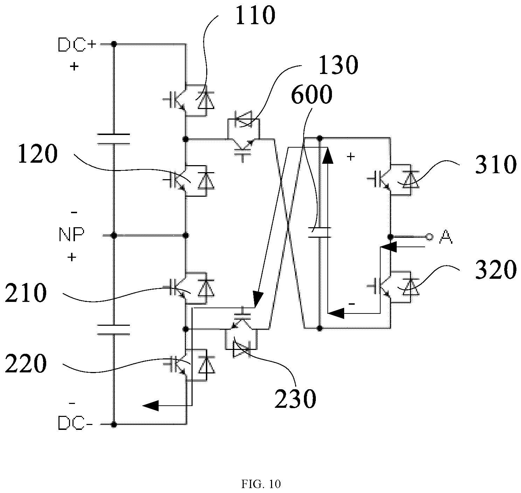

In the case that the current flows from the alternating-current busbar to the direct-current busbar, and the voltage value is -2Vdc, FIG. 10 is an eighth schematic view of a current direction in a bidirectional energy storage converter according to an embodiment of the present disclosure, as shown in FIG. 10, in the case that the voltage value is -2Vdc, the fifth switching assembly 220, the sixth switching assembly 230 and the eighth switching assembly 320 are limited in an on state, the current flows from the alternating-current busbar through the eighth switching assembly 320, the third capacitor 600, the sixth switching assembly 230 and the fifth switching assembly 220, to the negative electrode of the direct-current busbar.

The third embodiment of the present disclosure provides an energy storage system, and the energy storage system comprises the bidirectional energy storage converter in the first aspect, and thus comprises all the beneficial effects of the bidirectional energy storage converter in the first aspect, which are not repeated herein.

It can be understood that the energy storage system further comprises an energy storage member which is connected to the direct-current busbar.

In the specification of the present disclosure, the term of "multiple" indicates two or more, unless otherwise explicitly specified or defined; the orientation or position relations indicated by the terms of "upper", "lower" and the like are based on the orientation or position relations shown in the accompanying drawings, and they are just intended to conveniently describe the present application and simplify the description, and are not intended to indicate or imply that the devices or units as indicated should have specific orientations or should be configured or operated in specific orientations, and then should not be construed as limitations to the present application; the terms of "connected to", "assembling", "fixing" and the like should be understood in a broad sense, for example, the term "connected to" may be a fixed connection, and may also be a removable connection, or an integral connection; and the term may be a direct connection and may also be an indirect connection through an intermediate medium. A person of ordinary skills in the art could understand the specific meanings of the terms in the present disclosure according to specific situations.

In the description of the present specification, the descriptions of the phrases "one embodiment", "some embodiments" and "specific embodiments" and the like mean that the specific features, structures, materials or characteristics described in combination with the embodiment(s) or example(s) are included in at least one embodiment or example of the present disclosure. In the specification, the schematic representation of the above phrases does not necessarily refer to the same embodiment or example. Moreover, the particular features, structures, materials or characteristics described may be combined in a suitable manner in any one or more of the embodiments or examples.

The descriptions above are only preferred embodiments of the present disclosure, and are not configured to limit the present disclosure. For a person skilled in the art, the present disclosure may have various changes and variations. Any modifications, equivalent substitutions, improvements, etc. made within the spirit and principle of the present disclosure shall all be included in the protection scope of the present disclosure.

## Claims

1. A bidirectional energy storage converter, comprising:
at least one bridge arm, wherein each bridge arm comprises:
a first switching circuit, wherein a first end of the first switching circuit is connected to a positive electrode of a direct-current busbar, and a second end of the first switching circuit is connected to a neutral point of the direct-current busbar;
a second switching circuit, wherein a first end of the second switching circuit is connected to the neutral point of the direct-current busbar, and a second end of the second switching circuit is connected to a negative electrode of the direct-current busbar; and
a third switching circuit, wherein a first end of the third switching circuit is connected to a third end of the second switching circuit, a second end of the third switching circuit is connected to a third end of the first switching circuit, and a third end of the third switching circuit is connected to an alternating-current busbar.

2. The bidirectional energy storage converter according to claim 1, wherein, the first switching circuit comprises:
a first switching assembly, wherein a first end of the first switching assembly is connected to the positive electrode of the direct-current busbar;
a second switching assembly, wherein a first end of the second switching assembly is connected to a second end of the first switching assembly, and a second end of the second switching assembly is connected to the neutral point of the direct-current busbar; and
a third switching assembly, wherein a first end of the third switching assembly is connected to the second end of the first switching assembly, and a second end of the third switching assembly is connected to the second end of the third switching circuit.

3. The bidirectional energy storage converter according to claim 2, wherein,
the first switching assembly comprises:
a first switching tube, wherein a first end of the first switching tube is connected to the positive electrode of the direct-current busbar; and
a first diode, wherein a negative electrode of the first diode is connected to the first end of the first switching tube, and a positive electrode of the first diode is connected to a second end of the first switching tube;
the second switching assembly comprises:
a second switching tube, wherein a first end of the second switching tube is connected to the second end of the first switching tube, and a second end of the second switching tube is connected to the neutral point of the direct-current busbar; and
a second diode, wherein a negative electrode of the second diode is connected to the first end of the second switching tube, and a positive electrode of the second diode is connected to the second end of the second switching tube; and
the third switching assembly comprises:
a third switching tube, wherein a first end of the third switching tube is connected to the second end of the first switching tube, and a second end of the third switching tube is connected to the second end of the third switching circuit; and
a third diode, wherein a negative electrode of the third diode is connected to the first end of the third switching tube, and a positive electrode of the third diode is connected to the second end of the third switching tube.

4. The bidirectional energy storage converter according to claim 1, wherein, the second switching circuit comprises:
a fourth switching assembly, wherein a first end of the fourth switching assembly is connected to the neutral point of the direct-current busbar;
a fifth switching assembly, wherein a first end of the fifth switching assembly is connected to a second end of the fourth switching assembly, and a second end of the fifth switching assembly is connected to the negative electrode of the direct-current busbar; and
a sixth switching assembly, wherein a first end of the sixth switching assembly is connected to the first end of the third switching circuit, and a second end of the sixth switching assembly is connected to the second end of the fourth switching assembly.

5. The bidirectional energy storage converter according to claim 4, wherein,
the fourth switching assembly comprises:
a fourth switching tube, wherein a first end of the fourth switching tube is connected to a0 electrode of the direct-current busbar; and
a fourth diode, wherein a negative electrode of the fourth diode is connected to the first end of the fourth switching tube, and a positive electrode of the fourth diode is connected to a second end of the fourth switching tube;
the fifth switching assembly comprises:
a fifth switching tube, wherein a first end of the fifth switching tube is connected to the second end of the fourth switching tube, and a second end of the fifth switching tube is connected to the negative electrode of the direct-current busbar; and
a fifth diode, wherein a negative electrode of the fifth diode is connected to the first end of the fifth switching tube, and a positive electrode of the fifth diode is connected to the second end of the fifth switching tube; and
the sixth switching assembly comprises:
a sixth switching tube, wherein a first end of the sixth switching tube is connected to the second end of the fourth switching tube, and a second end of the sixth switching tube is connected to the first end of the third switching circuit; and
a sixth diode, wherein a positive electrode of the sixth diode is connected to the first end of the sixth switching tube, and a negative electrode of the sixth diode is connected to the second end of the sixth switching tube.

6. The bidirectional energy storage converter according to claim 1, wherein, the third switching circuit comprises:
a seventh switching assembly, wherein a first end of the seventh switching assembly is connected to the third end of the second switching circuit, and a second end of the seventh switching assembly is connected to the alternating-current busbar; and
an eighth switching assembly, wherein a first end of the eighth switching assembly is connected to a second end of the seventh switching assembly, and a second end of the eighth switching assembly is connected to the first end of the first switching circuit.

7. The bidirectional energy storage converter according to claim 6, wherein,
the seventh switching assembly comprises:
a seventh switching tube, wherein a first end of the seventh switching tube is connected to the second switching circuit, and a second end of the seventh switching tube is connected to the alternating-current busbar; and
a seventh diode, wherein a negative electrode of the seventh diode is connected to the first end of the seventh switching tube, and a positive electrode of the seventh diode is connected to a second end of the seventh switching tube; and
the eighth switching assembly comprises:
an eighth switching tube, wherein a first end of the eighth switching tube is connected to the second end of the seventh switching tube, and a second end of the eighth switching tube is connected to the first switching circuit; and
an eighth diode, wherein a negative electrode of the eighth diode is connected to the first end of the eighth switching tube, and a positive electrode of the eighth diode is connected to the second end of the eighth switching tube.

8. The bidirectional energy storage converter according to any one of claims 1 to 7, further comprising:
a first capacitor, wherein, a first end of the first capacitor is connected to the positive electrode of the direct-current busbar; and
a second capacitor, wherein a first end of the second capacitor is connected to a second end of the first capacitor and the neutral point of the direct-current busbar, and a second end of the second capacitor is configured to connect to the negative electrode of the direct-current busbar.

9. The bidirectional energy storage converter according to any one of claims 1 to 7, further comprising:
a third capacitor, and the first end of the third capacitor is connected to the first end of the third switching circuit and the second end of the third capacitor is connected to the second end of the third switching circuit.

10. An energy storage system, comprising:
the bidirectional energy storage converter according to any one of claims 1 to 9.
